# EUROPÄISCHE PATENTANMELDUNG

(11) **EP 1 717 561 A1**
(43) Veröffentlichungstag der Anmeldung: **02.11.2006**
(21) Anmeldenummer: 06001800.9
(22) Anmeldetag: 30.01.2006
(51) Int. Cl.: G01F 1/58

(54) **Magnetisch-induktives Durchflussmessgerät**

(30) Priorität: 24.02.2005 DE 102005008918; 03.01.2006 DE 102006000814
(71) Anmelder: Krohne AG, 4019 Basel (CH)
(72) Erfinder: Visser, Johannes Cornelius, 3362 JL Sliedrecht (NL); Herremans, Pieter, 3381 LH Giessenburg (NL); Heijnsdijk, Alexander Marnix, 3356 BW Papendrecht (NL); Lodge, Graham Roderick, Needingworth Cambs PE27 4SH (GB); Johnson, Paul Anthony, Cherry Hinton Cambridge CB1 9LY (GB)
(74) Vertreter: Gesthuysen, von Rohr & Eggert

(57) **Zusammenfassung**

Die Erfindung betrifft ein magnetisch-induktives Durchflußmeßgerät, zur Durchflußmessung eines strömenden Mediums, mit einem Meßrohr 1 zum Führen des Mediums und einem in dem Meßrohr 1 vorgesehenen Einsatz 2. Erfindungsgemäß ist vorgesehen, daß der Einsatz 2 wenigstens ein erstes Teil 3 und ein zweites Teil 4 aufweist, wobei das erste Teil 3 von der einen Seite des Meßrohrs 1 her in das Meßrohr 1 eingeführt ist und das zweite Teil 4 von der anderen Seite des Meßrohrs 1 her kommend mit dem ersten Teil 3 in abdichtender Weise mit Spiel in Längsrichtung verbunden ist. Auf diese Weise wird ein einfach installierbarer Einsatz erzielt, bei dem ein sicherer und haltbarer Sitz gewährleistet ist.

## Beschreibung

Die Erfindung betrifft ein magnetisch-induktives Durchflußmeßgerät, zur Durchflußmessung eines strömenden Mediums, mit einem Meßrohr und einem in dem Meßrohr vorgesehenen Einsatz zum Führen des Mediums, wobei der Einsatz wenigstens ein erstes Teil und ein zweites Teil aufweist, das erste Teil von der einen Seite des Meßrohr her in das Meßrohr eingeführt ist und das zweite Teil von der anderen Seite des Meßrohrs her kommend mit dem ersten Teil in abdichtender Weise verbunden ist. Ein derartiges magnetisch-induktives Durchflußmeßgerät ist aus der WO 00/47954 A 1 bekannt.

Magnetisch-induktive Durchflußmeßgeräte sind schon seit langer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei bereits auf Faraday zurück, der im Jahre 1832 vorgeschlagen hat, das Prinzip der elektromagnetischen Induktion zur Strömungsgeschwindigkeitsmessung anzuwenden.

Nach dem Faradayschen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faradaysche Induktionsgesetz wird bei einem magnetisch-induktiven Durchflußmeßgerät dadurch ausgenutzt, daß mittels einer Magnetspule ein Magnetfeld erzeugt wird, das eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung.

Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist ferner die Proportionalität zwischen der Meßspannung und der über den Querschnitt des Meßrohrs gemittelten Strömungsgeschwindigkeit des Mediums, d. h. zwischen Meßspannung und Volumenstrom.

Wenigstens im Bereich der Meßelektroden ist es erforderlich, daß der Innenbereich des Meßrohrs elektrisch isolierend ist oder eine elektrisch isolierende Auskleidung aufweist. Dazu kann ein derartiger Einsatz verwendet werden, wie eingangs beschrieben. Ein magnetisch-induktives Durchflußmeßgerät mit einem solchen Einsatz ist z. B. aus der DE 100 46 195 C2 bekannt.

Dort ist beschrieben, den Einsatz derart auszugestalten, daß wenigstens ein Endabschnitt des Einsatzes elastisch ist, während der Mittelabschnitt steif ausgebildet ist, wobei ferner der Mittelabschnitt aus einem ersten Material und der Endabschnitt aus einem zweiten Material hergestellt ist und das zweite Material ein niedrigeres Elastizitätsmodul aufweist als das erste Material. Der Einsatz wird aus diesen Materialien einteilig vorgefertigt und kann dann in das Meßrohr des magnetisch-induktiven Durchflußmeßgeräts eingeführt werden, indem der elastisch ausgebildete Endabschnitt so weit verformt wird, daß er durch das Innere des Meßrohrs hindurchgeführt werden kann. Nachdem der Einsatz dann in das Meßrohr eingeführt und der elastische Abschnitt auf der anderen Seite des Meßrohrs wieder herausgeführt worden ist, kann der elastische Abschnitt wieder entspannen. Auf diese Weise kann ein Einsatz realisiert werden, der an seinen beiden Enden jeweils einen Endflansch aufweist, der sich außerhalb des Meßrohrs befindet und dessen Außendurchmesser den Innendurchmesser des Meßrohrs übersteigt. Während das Einführen eines solchen Einsatzes in das Meßrohr relativ gut handhabbar ist, scheint jedoch die Ausgestaltung des Einsatzes aus wenigstens zwei unterschiedlichen Materialien mit voneinander verschiedenen Elastizitätsmodulen problematisch zu sein.

Es ist die Aufgabe der Erfindung, ein derartiges magnetisch-induktives Durchflußmeßgerät anzugeben, das über einen Einsatz verfügt, der einfach installierbar ist und eine gute Haltbarkeit aufweist.

Ausgehend von dem eingangs beschriebenen magnetisch-induktiven Durchflußmeßgerät ist diese Aufgabe dadurch gelöst, daß zwischen dem ersten Teil und dem zweiten Teil Spiel in Längsrichtung vorgesehen ist.

Erfindungsgemäß ist also vorgesehen, daß das erste Teil und das zweite Teil unter Beibehaltung ihrer abdichtenden Verbindung zueinander längsverschiebbar sind. Dies ermöglicht nicht nur eine einfache Installation, bei der die beiden Teile z. B. einfach ineinander geschoben werden, sondern gewährleistet auch, daß der Einsatz einer Wärmeausdehnung des Meßrohrs folgen kann, ohne Schaden zu nehmen. Damit wird die Ausbildung der beiden Teile aus einem steifen und damit formstabilen und widerstandsfähigen Material ermöglicht, das eine hohe Druckstabilität aufweist.

Es kann z. B. vorgesehen sein, daß das erste Teil auf der seiner Einflihrungsseite gegenüberliegenden Seite des Meßrohrs wieder herausgeführt ist und dort mit dem zweiten Teil in abdichtender Weise verbunden wird. Gemäß einer bevorzugten Weiterbildung der Erfindung ist jedoch vorgesehen, daß auch das zweite Teil in das Meßrohr eingeführt ist, nämlich von der anderen Seite des Meßrohrs her, und das erste Teil und das zweite Teil dann innerhalb des Meßrohrs in abdichtender Weise miteinander verbunden sind.

Diese Verbindung kann grundsätzlich an einer beliebigen Stelle im Meßrohr erfolgen, insbesondere ist auch eine Verbindung im mittleren Bereich des Meßrohrs möglich. Gemäß einer bevorzugten Weiterbildung der Erfindung ist jedoch vorgesehen, daß das erste Teil und das zweite Teil in einem Endbereich des Meßrohrs miteinander verbunden sind. Dies erleichtert einerseits nämlich die Installation und ermöglicht andererseits, im mittleren Bereich des Meßrohrs ungestört die Elektroden zum Abgriff der induzierten Spannung anzuordnen.

Gemäß einer bevorzugten Weiterbildung der Erfindung ist vorgesehen, daß der Einsatz wenigstens abschnittsweise aus einem isolierenden Material besteht. Als vorteilhaft hat sich nämlich herausgestellt, im Bereich der Elektroden über eine Länge des Meßrohrs, die im wesentlichen seinem Innendurchmesser bzw. dem Innendurchmesser des Einsatzes entspricht, ein isolierendes Material vorzusehen. Dabei ist es natürlich auch möglich, den Einsatz vollständig aus einem isolierenden Material auszubilden.

Grundsätzlich kann vorgesehen sein, daß der Einsatz die Innenwand des Meßrohrs nur abschnittsweise, z. B. im wesentlichen im Bereich der Elektroden, von dem in dem Meßrohr geführten Medium trennt. Gemäß einer bevorzugten Weiterbildung der Erfindung ist jedoch vorgesehen, daß der Einsatz die Innenwand des Meßrohrs vollständig, also über die gesamte Länge des Meßrohrs, von dem in dem Meßrohr geführten Medium trennt.

Eingangs ist schon ausgeführt worden, daß das erste Teil und das zweite Teil in abdichtender Weise miteinander verbunden sind. Gemäß einer bevorzugten Weiterbildung der Erfindung ist ferner vorgesehen, daß jeweils eine Abdichtung zwischen der Außenseite des ersten Teils bzw. der Außenseite des zweiten Teils einerseits und der Innenwand des Meßrohrs andererseits vorgesehen ist. Insbesondere haben sich hierfür O-Ringe als geeignet herausgestellt, die in entsprechenden Nuten in der Außenseite des ersten Teils bzw. des zweiten Teils vorgesehen sind.

Was die Abdichtung zwischen dem ersten Teil und dem zweiten Teil angeht, ist gemäß einer bevorzugten Weiterbildung der Erfindung vorgesehen, daß das erste Teil und das zweite Teil längs eines Überlappabschnitts ineinander eingeschoben sind. In diesem Überlappabschnitt zwischen dem ersten Teil und dem zweiten Teil kann dann eine Abdichtung realisiert sein, z. B. in Form eines in einer Nut vorgesehenen O-Rings. Gemäß einer bevorzugten Weiterbildung der Erfindung ist insbesondere eine Befestigung der beiden Rohre miteinander mittels Rasthaken vorgesehen. Diese sind derart ausgestaltet, daß sich die beiden Teile nicht ohne weiteres voneinander lösen können, gleichwohl ein Spiel zwischen den beiden Teilen in Längsrichtung erhalten bleibt.

Grundsätzlich kann es ausreichend sein, den Einsatz ohne zusätzliche Fixiervorkehrungen in das Meßrohr des magnetisch-induktiven Durchflußmeßgeräts einzuflihren. Gemäß einer bevorzugten Weiterbildung der Erfindung ist jedoch vorgesehen, daß der Einsatz mit einer Verdrehsicherung versehen ist, z. B. in Form einer reib- oder formschlüssigen Verbindung zwischen der Außenseite des Einsatzes und der Innenwand des Meßrohrs.

Weiterhin ist es grundsätzlich möglich, daß das erste Teil und das zweite Teil vollständig an der Innenwand des Meßrohrs anliegen. Gemäß einer bevorzugten Weiterbildung der Erfindung ist jedoch vorgesehen, daß das erste Teil und/oder das zweite Teil wenigstens abschnittsweise im Abstand zur Innenwand des Meßrohrs angeordnet sind. Insbesondere ist in diesem Zusammenhang gemäß einer bevorzugten Weiterbildung der Erfindung vorgesehen, daß der Einsatz in einem Außenbereich Aufnahmeeinrichtungen für Magnetspulen aufweist. Damit wird es nämlich möglich, den Einsatz zusammen mit Magnetspulen in einem Meßrohr mit einfachen, rundem Querschnitt vorzusehen, wobei das Meßrohr keine zusätzlichen Einrichtungen zur Aufnahme und Anbringung der Magnetspulen aufweisen muß.

Schließlich ist es gemäß einer bevorzugten Weiterbildung der Erfindung vorgesehen, daß das erste Teil und/oder das zweite Teil jeweils einen Endflansch aufweisen, der insbesondere ein weiteres Hineinrutschen des ersten Teils bzw. des zweiten Teils in das Meßrohr verhindert und damit insgesamt einen festen und sicheren Sitz des Einsatzes im Meßrohr des magnetisch-induktiven Durchflußmeßgeräts gewährleistet.

Im einzelnen gibt es nun eine Vielzahl von Möglichkeiten, das erfindungsgemäße magnetisch-induktive Durchflußmeßgerät auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1a und 1b: die Installation des Einsatzes in dem Meßrohr eines magnetisch-induktiven Durchflußmeßgeräts gemäß einem bevorzugten Ausftihrungsbeispiel der Erfindung im Schnitt und
- Fig. 2: ein Detail des magnetisch-induktiven) Durchflußmeßgeräts gemäß dem bevorzugten Ausführungsbeispiel der Erfindung, ebenfalls im Schnitt.

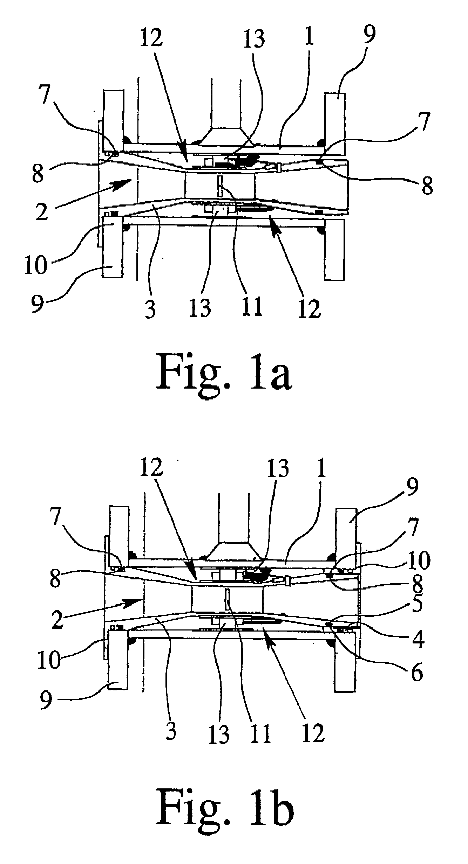

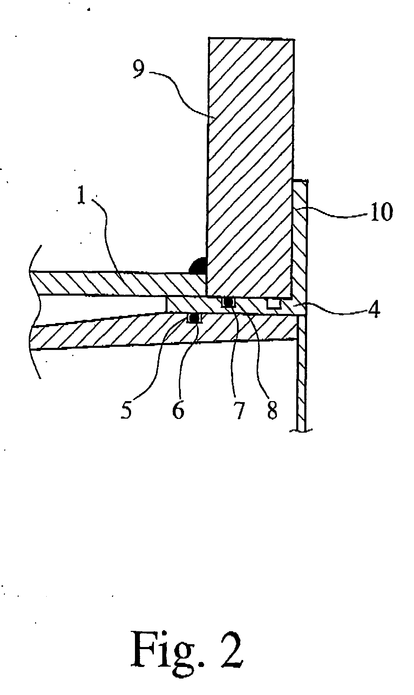

Aus den Fig. 1a und 1b ist ein magnetisch-induktives Durchflußmeßgerät gemäß einem ersten bevorzugten Ausführungsbeispiel der Erfindung mit seinem Meßrohr 1, in das ein Einsatz 2 eingesetzt wird im Schnitt dargestellt. Wie aus Fig. 1a ersichtlich, weist der Einsatz 2 ein erstes Teil 3 auf, das von der linken Seite des Meßrohrs 1 her kommend in dasselbe eingeführt worden ist. Das erste Teil 3 erstreckt sich dabei über die gesamte Länge des Meßrohrs 1. Von der anderen Seite des Meßrohrs 1 her kommend wird dann, wie aus Fig. 2b ersichtlich, ein zweites Teil 4 des Einsatzes 2 in das Meßrohr 1 eingeführt. Dabei wird das zweite Teil 4 abschnittsweise über den rechten Endbereich des ersten Teils 3 geschoben, so daß eine abdichtende Verbindung realisiert werden kann.

Zur Abdichtung zwischen dem ersten Teil und dem zweiten Teil ist nämlich in einer Nut 5 in der Außenseite des rechten Endbereichs des ersten Teils 3 ein umlaufender O-Ring 6 vorgesehen, der auf den Innenbereich des linken Endbereichs des zweiten Teils 4 drückt und damit eine Abdichtung zwischen dem ersten Teil 3 und dem zweiten Teil 4 bewirkt. Entsprechendes ist im Detail auch nochmal aus Fig. 2 ersichtlich.

Eine Abdichtung zwischen dem Einsatz 2, bestehend aus dem ersten Teil 3 und dem zweiten Teil 4, und dem Meßrohr 1 wird auf ähnliche Weise erzielt, nämlich mittels O-Ringen 7, die in Nuten 8 auf der jeweiligen Außenseite des ersten Teils 3 bzw. des zweiten Teils 4 vorgesehen sind, und zwar im jeweiligen Endbereich des Meßrohrs 1.

Zum Einbau des magnetisch-induktiven Durchflußmeßgeräts gemäß dem vorliegend beschriebenen bevorzugten Ausführungsbeispiel der Erfindung ist an den Enden des Meßrohrs 1 jeweils ein Endflansch 9 vorgesehen. Darüber hinaus weisen auch das erste Teil 3 und das zweite Teil 4 an ihren jeweiligen, nach außen gerichteten Enden einen Endflansch 10 auf, der jeweils außerhalb des Meßrohrs 1 vorgesehen ist und dessen Außendurchmesser den Innendurchmesser des Meßrohrs 1 übersteigt. Damit können die Endflansche 10 des Einsatzes 2 auch zur Abdichtung gegenüber dem Rohrleitungssystem dienen, in das das magnetisch-induktive Durchflußmeßgerät gemäß dem vorliegend beschriebenen bevorzugten Ausführungsbeispiel der Erfindung mittels seiner Endflansche 9 eingebaut wird.

Bei dem vorliegend beschriebenen, aus der Zeichnung ersichtlichen magnetisch-indulctiven Durchflußmeßgeräts gemäß dem bevorzugten Ausführungsbeispiel der Erfindung ist es lediglich vorgesehen, daß das Teil 3 und das Teil 4 längs eines Überlappabschnitts ineinander geschoben werden, so daß, wie oben beschrieben, eine abdichtende Verbindung zwischen den beiden Teilen 3, 4 erzielt werden kann. Die Längsverschiebbarkeit der Teile 3, 4 zueinander, also das Spiel in Längsrichtung, ist damit ohne weiteres gegeben. Vorliegend sind keine zusätzlichen Einrichtungen vorgesehen, um die Teile 3, 4 aneinander oder am Meßrohr 1 zu fixieren. Dies erleichtert Konstruktion und Zusammenbau. Es ist jedoch auch möglich, die Teile 3, 4 mit Verbindungselementen, wie Rasthaken, zu versehen, so daß es automatisch zu einer Fixierung der Teile 3, 4 aneinander kommt, wenn diese zusammengeschoben werden. Diese Ausgestaltung ermöglicht immer noch einen einfachen Zusammenbau, während darüber hinaus gewährleistet ist, daß die Teile 3, 4 sich nicht ohne weiteres mehr voneinander lösen können. Schließlich ist es auch möglich, wie oben angesprochen, die Teile 3, 4 jeweils am Meßrohr 1 zu befestigen.

Wie insbesondere aus den Fig. 1a und 1b ersichtlich, weist der vorliegend aus Kunststoffgußteilen ausgebildete Einsatz 2 einen sich im Einlaufbereich und im Auslaufbereich in Längsrichtung des Meßrohrs 1 verändernden Querschnitt auf Im mittleren Bereich, in dem Elektroden 11 zum Abgriff der induzierten Spannung vorgesehen sind, bleibt der Querschnitt konstant. Auf diese Weise wird erreicht daß der Einsatz 2 über wesentliche Bereiche im Inneren des Meßrohrs 1 im Abstand zu dessen Innenwand angeordnet ist, so daß Aufnahmebereiche 12 zur Anordnung von Magnetspulen 13 entstehen. Dies ermöglicht den Einbau des Einsatzes 2 zusammen mit den Magnetspulen 13 in ein mechanisch stabiles Edelstahlrohr mit einfachem, kreisförmigem Querschnitt.

Insgesamt wird damit ein magnetisch-induktives Durchflußmeßgerät zur Verfügung gestellt, das einen einfach installierbaren Einsatz 2 aufweist, der in einem herkömmlichen Meßrohr 1 aus Edelstahl mit rundem Querschnitt vorgesehen werden kann, wobei der Einsatz 2 zusammen mit den Magnetspulen 13 auf einfache Weise installierbar ist, wobei gleichzeitig ein sicherer und haltbarer Sitz des Einsatzes 2 gewährleistet wird.

## Patentansprüche

1. Magnetisch-induktives Durchflußmeßgerät, zur Durchflußmessung eines strömenden Mediums, mit einem Meßrohr (1) und einem in dem Meßrohr (1) vorgesehenen Einsatz (2) zum Führen des Mediums, wobei der Einsatz (2) wenigstens ein erstes Teil (3) und ein zweites Teil (4) aufweist das erste Teil (3) von der einen Seite des Meßrohr (1) her in das Meßrohr (1) eingeführt ist und das zweite Teil (4) von der anderen Seite des Meßrohrs (1) her kommend mit dem ersten Teil (3) in abdichtender Weise verbunden ist, **dadurch gekennzeichnet, daß** zwischen dem ersten Teil (3) und dem zweiten Teil (4) Spiel in Längsrichtung vorgesehen ist.

2. Magnetisch-induktives Durchflußmeßgerät nach Anspruch 1, **dadurch gekennzeichnet, daß** der Einsatz (2) aus einem steifen Material besteht.

3. Magnetisch-induktives Durchflußmeßgerät nach Anspruch 1 oder 2, **dadurch gekennzeichnet, daß** das erste Teil (3) und das zweite Teil (4) längs eines Überlappabschnitts ineinander geschoben sind.

4. Magnetisch-induktives Durchflußmeßgerät nach Anspruch 3, **dadurch gekennzeichnet, daß** in dem Überlappabschnitt zwischen dem ersten Teil (3) und dem zweiten Teil (4) eine Abdichtung (5, 6) vorgesehen ist.

5. Magnetisch-induktives Durchflußmeßgerät nach einem der Ansprüche 1 bis 4, **dadurch gekennzeichnet, daß** jeweils eine Abdichtung (7, 8) zwischen der Außenseite des ersten Teils (3) bzw. des zweiten Teils (4) einerseits und der Innenwand des Meßrohrs (I) andererseits vorgesehen ist.

6. Magnetisch-induktives Durchflußmeßgerät nach einem der Ansprüche 1 bis 5, **dadurch gekennzeichnet, daß** der Einsatz (2) mit einer Verdrehsicherung versehen ist.

7. Magnetisch-induktives Durchflußmeßgerät nach einem der Ansprüche 1 bis 6, **dadurch gekennzeichnet, daß** das erste Teil (3) und/oder das zweite Teil (4) wenigstens abschnittsweise im Abstand zur Innenwand des Meßrohrs (1) angeordnet sind.

8. Magnetisch-induktives Durchflußmeßgerät nach Anspruch 7, **dadurch gekennzeichnet, daß** der Einsatz in seinem Außenbereich Aufnahmeeinrichtungen (12) für Magnetspulen (13) aufweist.

9. Magnetisch-induktives Durchflußmeßgerät nach einem der Ansprüche 1 bis 8, **dadurch gekennzeichnet, daß** das erste Teil (3) und/oder das zweite Teil (4) jeweils einen Endflansch (10) aufweisen.

10. Magnetiscli-induktives Durchflußmeßgerät nach einem der Ansprüche 1 bis 9, **dadurch gekennzeichnet, daß** das erste Teil (3) mit dem zweiten Teil (4) mittels Rasthaken verbunden ist.
